# EUROPEAN PATENT APPLICATION

(11) **EP 3 181 521 A1**
(43) Date of publication of application: **21.06.2017**
(21) Application number: 16180862.1
(22) Date of filing: 22.07.2016
(51) Int. Cl.: C02F 1/68, C02F 1/66, C02F 1/44

(54) **PURIFIED AND RE-MINERALIZED WATER**

(30) Priority: 16.12.2015 EP 15200355
(71) Applicant: Nestec S.A., 1800 Vevey (CH)
(72) Inventor: COLLENOT, Julien, 88800 Vittel (FR); MARCHAL, Eric, 88800 VITTEL (FR)
(74) Representative: Rosolen-Delarue, Katell

(57) **Abstract**

Re-mineralized water comprising calcium, magnesium, and bicarbonate ions in a 1:1:4 molar ratio, said calcium, magnesium, and bicarbonate ions constituting at least 75% by weight of all ions in said re-mineralized water.

## Description

### Cross-References to Related Applications

This application claims the priority of European patent application No. EP 15 200 344.5, filed on 16/12/2015, the contents of which are incorporated herein by reference in their entirety.

### Field of the invention

The present invention concerns purified and re-mineralized water, in particular purified and re-mineralized water having a particular chemical composition.

### Background of the invention

In the arts of water treatment, it is well known to purify water for human consumption and/or industrial use by the process of reverse osmosis. In reverse osmosis, a volume of liquid containing contaminants is introduced into a chamber on one side of a semi-permeable membrane (*i.e.* having pores large enough to pass the molecules of the solvent liquid but not those of the solute contaminant). By pressurizing the liquid above its osmotic pressure, the solvent liquid molecules will diffuse across the membrane but the solute molecules will remain; the resulting brine is then discarded and the solvent liquid thus purified is retained.

Such reverse-osmosis systems can be configured to produce purified water from virtually any source, and remove many of the contaminants contained therein, including dissolved mineral ions, with great effectiveness.

While this is advantageous for many reasons and in many applications, it is nonetheless imperfect for the production of drinking water. Specifically, the reverse-osmosis process is not selective, *i.e.* it removes all dissolved mineral ions, both those which are desirable for health and taste along with those which are not.

It is therefore known to pass the reverse-osmosis-treated water through a subsequent step for replenishing certain of the minerals lost and adding other desirable minerals not present in the water prior to the start of the purification process.

In particular, the elements calcium and magnesium, and the polyatomic ion bicarbonate (HCO₃) are particularly desirable, as their presence in drinking water may contribute to establishing and maintaining physical and mental health. These ions are also partly responsible for creating a pleasant taste in the drinking water.

In addition, these ions are essentials for human health.

Calcium is one of the major mineral components of the human skeletal system and is also an essential nutrient required for nerve conduction, muscle contraction, hormone and enzyme secretion, and blood clotting. Adequate calcium is needed for adequate mineralization and maintenance of growing bones. The 2015 Dietary Guidelines Advisory Committee (DGAC) found that calcium is under consumed relative to the Estimated Average Requirement or Adequate Intake levels set by the IOM. As such, DGAC characterized calcium as a shortfall nutrient and also as a nutrient of public health concern because its under consumption has been linked in the scientific literature to adverse health outcomes.

Magnesium is an essential element that plays many crucial roles in human body. Among other things, magnesium is critical in energy-requiring metabolic processes, in protein synthesis, membrane integrity, nervous tissue conduction, and muscle contraction. Magnesium is present in fruits, vegetables, grains, milk, meat and fish. The 2015 DGAC characterized magnesium as a shortfall nutrient due to the osmotic activity of unabsorbed salts in the intestine and colon and the stimulation of gastric motility.

One means of providing these ions is to dissolve a mixture of mineral salts into the water. Commonly employed additives include calcium chloride (CaCl₂), magnesium sulphate (MgSO₄) or chloride (MgCl₂), and bicarbonate of sodium (NaHCO₃) or potassium (KHCO₃).

However, the use of such salts will result in the presence of unwanted chloride, sulphate, sodium, and potassium ions, which negatively affect the taste of the water and, at certain quantities, can have deleterious effects on the health of certain sensitive consumers.

It is therefore desirable to provide a means for re-mineralizing reverse-osmosis-treated water with desirable ions, without also adding undesirable minerals and/or compounds such as these or others.

### Summary of the invention

To this end, the invention is directed in a first aspect towards re-mineralized water comprising dissolved calcium, magnesium, and bicarbonate ions in a ratio of approximately one mole each of calcium and magnesium ions to four moles of bicarbonate ions, said calcium, magnesium, and bicarbonate ions collectively comprising at least seventy-five per cent by weight of the total amount of dissolved ions in said re-mineralized water.

Re-mineralized water so composed is advantageous in that it comprises a desirable concentration of the calcium, magnesium, and bicarbonate ions which are important to the health and well-being of the consumer, while at the same time being low in content of other, undesirable ions. Such undesirable ions are those which may impart an unpleasant taste or colour to the water, reduce its shelf life or yield an unsightly and/or foul-tasting precipitate, or simply be toxic or have an otherwise deleterious effect on the health of the consumer; their exclusion is thus advantageous in that the benefits of re-mineralizing water are realized without the drawbacks previously encountered in the methods known in the art.

Preferably, the group of ions consisting of chloride, sulphate, sodium, and potassium constitutes no more than twenty per cent by weight of all ions dissolved in the re-mineralized water.

More preferably, said group of ions constitutes no more than ten per cent by weight of all ions dissolved in the re-mineralized water.

Most preferably, said group of ions constitutes no more than two per cent by weight of all ions dissolved in the re-mineralized water.

In this way, the presence of the above-mentioned ions, which have a particularly acute effect on the taste, and in certain cases on the healthfulness of the re-mineralized water, is minimized.

In a possible embodiment, the re-mineralized water comprises between 10 and 40 milligrams per litre of calcium ions and between 6 and 25 milligrams per litre of magnesium ions.

Preferably, said re-mineralized water comprises between 10 and 20 milligrams per litre of calcium ions and 12.2 milligrams per litre of magnesium ions.

Preferably, said re-mineralized water comprises 20 milligrams per litre of calcium ions and 12.2 milligrams per litre of magnesium ions.

Such concentrations are advantageous in that they provide the necessary daily intake of calcium and magnesium when the re-mineralized water is consumed in an average quantity.

According to a second aspect, the invention is directed towards a method for producing re-mineralized water according to the above, comprising the steps of providing a flow of feedwater; purifying said feedwater by a reverse-osmosis process, thereby producing a flow of demineralized water; injecting carbon-dioxide into said demineralized water, thereby producing a flow of carbon dioxide-enriched water; and passing said carbon dioxide-enriched water through a re-mineralizer comprising a dolomite medium, thereby producing a flow of purified, re-mineralized water.

Dolomite is an anhydrous carbonate mineral composed of calcium magnesium carbonate that is mined from the earth. It's chemical name: Calcium magnesium carbonate; CaMg(CO₃)₂. In term of appearance, it is a white or grey to brownish material in crushed and granular form.

Such a method is advantageous in that it will cause the dolomite to dissolve into the water, thereby replacing certain desirable mineral ions that were removed during the reverse-osmosis process. As pure dolomite is composed of anhydrous calcium magnesium carbonate (CaMg(CO₃)₂), the presence of the carbon dioxide in the carbon-dioxide-enriched water will facilitate its dissolution into the water.

The demineralized water is thus re-mineralized with the desired calcium, magnesium, and bicarbonate ions in the desired ratios. Moreover, as a result of the composition of the dolomite the re-mineralized water has a greatly-reduced content of undesirable ions such as chloride, sodium, sulphate and potassium - any other ions will be the result of impurities present in the dolomite, and not from substances purposely added to the water as in the prior art. In this way, re-mineralized water contains the necessary concentrations of ions which are desired while minimizing the presence of ions which are not. As the below chemical reaction indicates, only calcium, magnesium, and bicarbonate ions are added to the purified water.

The chemical reaction happening in the dolomite filter:

Ca.Mg(CO₃)₂ + 2 CO₂ + 2 H₂O = Ca²⁺ + Mg²⁺ + 4 HCO3⁻

Re-mineralization by dolomite dissolution is also advantageous in that dolomite is a widely-occurring natural mineral substance. It is therefore inexpensive and easy to provide in industrial-scale quantities.

In a possible embodiment the method further comprises a diluting step wherein the flow of re-mineralized water is diluted with additional de-mineralized water.

This is advantageous in that a large volume of re-mineralized water having a desired content of dissolved ions can be produced from a relatively small volume of concentrated re-mineralized water.

Moreover, by varying the amount of additional de-mineralized water, one may produce re-mineralized water of varying ionic concentrations from a single source of such concentrated re-mineralized water, thereby offering greater flexibility and adaptability.

Preferably, the dolomite medium is a high-purity grade of dolomite, for example having less than 1% impurities or having less than 0.5% of impurities.

In this way high concentrations of calcium, magnesium, and bicarbonate ions can be achieved in the finished re-mineralized water, as

Moreover, the content of any undesired ions, such as those mentioned above, is minimized in that the high-purity dolomite contains little of such undesirable substances. The dolomite may thus be dissolved at a higher rate than might otherwise be possible with lower-quality grades of dolomite while still remaining within the concentration limits for such undesirable ions.

Moreover, when provided in a reasonably-pure grade, it can be used in a re-mineralization method essentially as it is, with possibly only a small amount of preparation, e.g. crushing, to give the dolomite medium a uniform grain size. In this way, the method is simplified.

Optionally, the flow of re-mineralized water is passed through a fine-particulate filter.

This is advantageous in that any undissolved dolomite or other such solids are removed from the re-mineralized water prior to its bottling, dispensing, and/or consumption.

According to a third aspect, the invention is directed towards a container comprising re-mineralized water as described above.

In this way, the advantages of the re-mineralized water described above are realized in a transportable, saleable form.

### Brief description of the drawings

Additional features and advantages of the present invention are described in, and will be apparent from, the description of the presently preferred embodiments which are set out below with reference to the drawings in which:
**Figure 1** is a schematic depiction of a first exemplary apparatus for producing water according to the invention;
**Figure 2** is a table comparing the mineral content of water according to the present invention to water produced by processes known in the prior art.
**Figure 3** is a schematic depiction of a second exemplary apparatus for producing re-mineralized water according to the invention; and
**Figure 4** is a schematic depiction of a third exemplary apparatus for producing re-mineralized water according to the invention.

### Detailed description of the invention

The invention will now be discussed in detail with respect to the above-mentioned Figures.

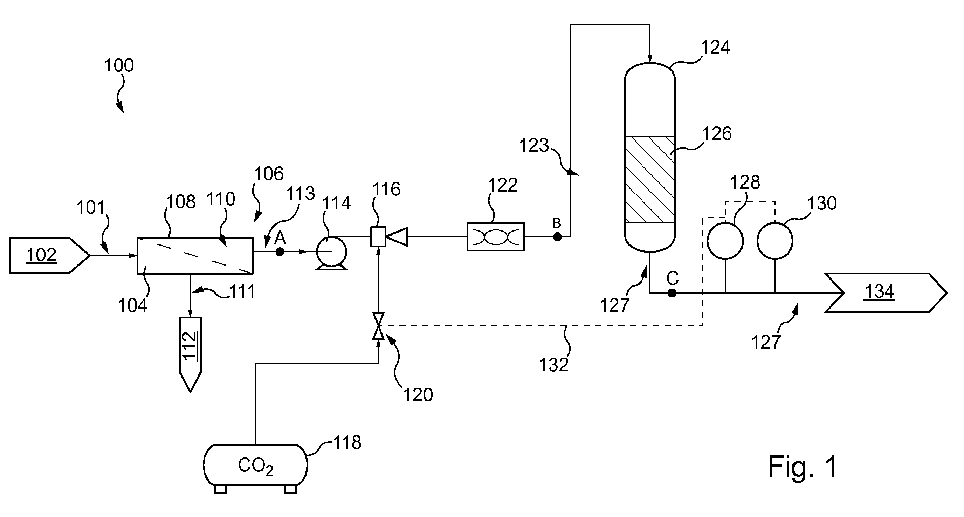

In Figure 1, there is depicted a first exemplary apparatus 100 for purifying water according to the invention. The apparatus 100 is supplied with a flow of feedwater 101 from a feedwater source 102, which is conducted into a high-pressure side 104 of a reverse-osmosis filter 106.

The reverse-osmosis apparatus 106 functions in the same way as those known in the art. The feedwater 101 is pressurized, either by the feedwater source 102 or by an additional pumping means disposed between the feedwater source 102 and the reverse-osmosis filter 106, which raises the pressure of the feedwater 101 above its osmotic pressure. This causes the water molecules in the feedwater 101 to diffuse across a reverse-osmosis membrane 108 in the reverse-osmosis filter 106 to a low-pressure side 110. The contaminants present in the feedwater are drawn off in the form of a concentrate 111, which is disposed e.g. through a drain 112.

In this way most, if not all, of the contaminants present in the feedwater are removed, and at the point A a flow of demineralized water 113 is furnished by the reverse-osmosis filter 106. In particular, where the feedwater 101 is seawater or otherwise contains such an amount of dissolved salt as to render it non-potable, such salt has been effectively eliminated by the reverse-osmosis filtration and discharged to the drain 112 in the concentrate 111. Typically, about 1/6^{th} of the volume of the feedwater 101 is rejected to the drain 112 as concentrate 111, but this may vary depending on the type and concentration of the contaminants found in the flow of feedwater 101.

It will be recognized by those skilled in the art that, in certain situations and depending on the contaminants present in the feedwater and on the system's flow rate and capacity, the reverse-osmosis system will vary from the simple representative version presented here.

In particular, it is well known to provide reverse-osmosis systems with pre-filtration devices, such as sediment filters to prevent larger particles from clogging the holes in the membrane of the reverse-osmosis filter. Moreover, disinfection apparatuses may be used to neutralize pathogenic microorganisms prior to reverse-osmosis filtration.

The invention should not, therefore, be construed as being limited to implementations where there is merely a reverse-osmosis filter as depicted here, but instead should be construed as encompassing any or all of such additional pre-filtration and treatment devices as may be appropriate.

From the reverse-osmosis filter 106 the demineralized water 113 is first pressurized by a pump 114, then passed to a carbon dioxide injector 116. The carbon dioxide injector 116 is in communication with a carbon dioxide supply 118 via a servo-operated proportional dosing valve 120.

The dosing valve 120 controls the flow of the carbon dioxide from the carbon dioxide supply and, by extension, the injection of the carbon dioxide into the flow of demineralized water 113 at the carbon dioxide injector 116. There may be further provided a static mixer 122, which promotes the mixing of the carbon dioxide into the demineralized water.

In any case, by the point B the carbon dioxide has been thoroughly mixed into the flow of demineralized water 113, resulting in a flow of carbon-dioxide-enriched water 123 which is then conducted to the re-mineralizer 124.

The re-mineraliser 124 is here provided in the form of a standard particulate filter column, and comprises a dolomite material bed 126 through which the flow of carbon-dioxide-enriched water 123 is conducted.

It will be recognized that the dimensions of the dolomite material bed 126 will depend in large part on the flow rate of the water through the re-mineralizer 124; as a general rule, the dolomite in the dolomite material bed 126 must dissolve into the demineralized water 113 at a rate sufficient to yield the desired concentrations of the calcium, magnesium, and bicarbonate ions.

The dimensions of the dolomite bed will therefore vary along with the flow rate of the carbon-dioxide-enriched water 123 and the desired concentration of the ions.

As the carbon-dioxide-enriched water 123 flows through the dolomite material bed 126, the elevated carbon dioxide content of the water causes the dolomite to dissolve into the water.

In this way, the carbon-dioxide-enriched water 123 is re-mineralized with the desired calcium, magnesium, and bicarbonate ions, and with these ions only. A resulting flow of purified, re-mineralized water 127 then flows from the re-mineralizer 126.

The purified, re-mineralized water 127 comprises calcium, magnesium, and bicarbonate ions in approximately a 1:1:4 molar ratio, respectively; these three ions will comprise at least 75% of the total content of dissolved ions in the water.

However, it may be possible, and indeed preferable, that these ions comprise 90-100% of the total dissolved ions in the water, depending on the desired mineral content, whether any other beneficial ions (e.g. fluoride) are added to the water, and the purity of the dolomite from which the dolomite material bed 126 is made. For this reason, it will be preferable to use a high-purity grade of dolomite for making said dolomite material bed 126.

By extension, then, the undesirable ions mentioned above (*i.e.* chloride, sulphate, sodium, and potassium) will comprise no more than 20% by weight of the ions dissolved, and ideally between 0% and 10%. In this way, their negative effects on taste, shelf life, etc. are minimized; in particular below 10% by weight the taste said undesirable ions impart to the water is undetectable to most people.

It will be understood that there are a number of factors which might affect the dissolution kinetics within the re-mineralizer 124, including temperature, the dimensions of the dolomite material bed 126, and the flow rate of the carbon-dioxide-enriched water 123 through the re-mineralizer 124. Adjusting these factors, either alone or in combination, can be done to alter said dissolution kinetics.

Downstream of the re-mineralizer 124 are disposed a conductivity sensor 128 and a pH sensor 130, which together serve to assess the level of mineral dissolution in the flow of purified, re-mineralized water.

Specifically, the conductivity meter 128 measures the amount of ions dissolved into the purified, re-mineralized water 127: the demineralized water 113 issuing from the reverse-osmosis filter 106 at point A will have a very low conductivity, generally below 20 µS/cm, but as the calcium, magnesium, and bicarbonate ions dissolve into it the conductivity of the flow of water increases. Thus, conductivity is a good proxy for the mineral concentration in the re-mineralized water 127.

Moreover, the pH of the purified, re-mineralized water 127 is measured to maximize the efficiency of the dissolution process. Specifically, while increasing the concentration of the CO₂ will increase the dissolution rate of the dolomite material bed 126, this increase is constrained by dimensional factors such as the depth of the dolomite material bed 126 and the flow rate through the re-mineralizer 124.

Any excess CO₂ that does not react with the dolomite material bed 126 will form carbonic acid (H₂CO₃), causing the pH of the flow of water 127 to drop. At a constant flow rate, therefore, a reduction in the pH of the flow of purified, re-mineralized water 127 downstream of the re-mineralizer 124 will thus indicate a decrease in the rate of dissolution of the dolomite material bed 126, and thus that too much CO₂ is being injected.

Thus, the operation of the dosing valve 120, and as a result the injection of CO₂, is governed by a feedback loop 132 which is at least partially dependent on the output of the conductivity sensor 128 and the pH sensor 130. In this way, a constant level of dissolved ions in the flow of purified, re-mineralized water 127 is maintained.

Moreover, it will be recognized that this feedback loop 132 may form part of a larger control system, which may be adapted to measure and adjust the volumetric flow rates of the water and the CO2 for optimal re-mineralization and output, and to determine when the dolomite material bed 126 needs to be replenished and inform an operator accordingly.

In this way, the concentrations of the calcium, magnesium, and bicarbonate ions are controlled, producing a re-mineralized water 127 having a desired ion composition.

Finally, the flow of purified, re-mineralized water 127 is conducted out of the apparatus 100, represented here schematically by an output 134. The output 134 may be a structure for the storage, distribution, or use of the purified, re-mineralized water 127, an apparatus for further treatment or processing, e.g. by the infusion of a flavouring concentrate, or simply an apparatus for bottling or otherwise packaging the purified, re-mineralized water 127.

In particular, it may be desirable to pass the purified, re-mineralized water 127 through a fine particulate filter, to remove any dolomite which may have escaped from the re-mineralizer 124. The purified, re-mineralized water 127 can also be treated again with ozone for maximal disinfection effectiveness. Unlike the mineral salts used in the processes known in the art, the dolomite contains no bromine and there is thus no danger of producing carcinogenic bromate through an additional ozonation step.

In any case, the purified, re-mineralized water 127 that is produced is very stable and consistent in terms of its calcium, magnesium, and bicarbonate composition. Moreover, the intervals for replenishing the dolomite material bed 126 are much longer, compared to the mineral-salt-infusion methods known in the art.

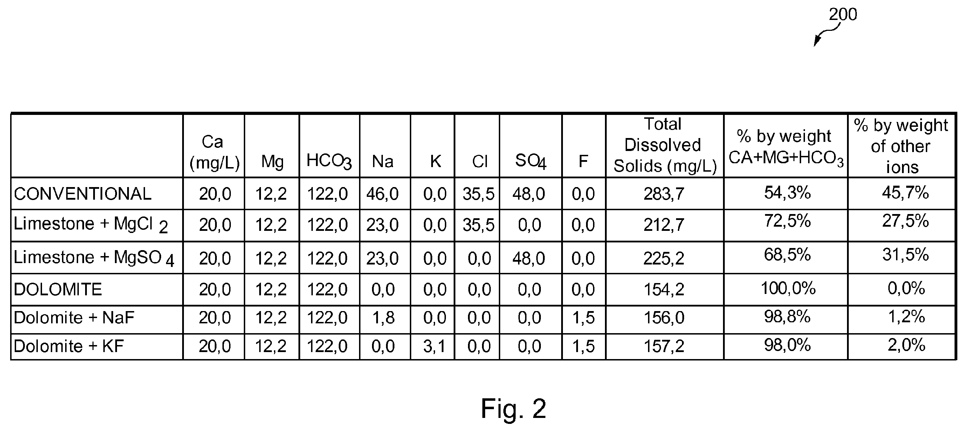

Turning now to Figure 2, the table 200 presents a comparison of the dissolved ion concentrations of water as known in the prior art is compared to water according to the present invention. It should be noted that silica (SiO₂) is not included in these calculations as only concerning few types of water.

On the first line of the chart, the mineral concentrations in water yielded by the conventional prior art re-mineralization methods (*i.e.* dissolution of mineral salts) are displayed. On lines two and three, water that has been mineralized by the dissolution of limestone and to which magnesium salts are added, is displayed. Below that, three permutations of water according to the invention (produced by a dolomite-dissolution method) are displayed.

In the conventional, prior-art re-mineralization method, where the content of calcium, magnesium, and bicarbonate ions is at a concentration of 20 mg/L, 12.2 mg/L, and 122 mg/L respectively, the content of the other, undesirable ions is considerable.

In particular, it can be seen that in such water produced by the conventional method, there is 35.5 mg/L of chloride, 46 mg/L of sodium, and 48 mg/L of sulphate ions, which collectively make up 46% of the dissolved substances in the water.

Natural limestone water is not much better: as limestone contains no naturally-existing magnesium, it is necessary to add such in the form of magnesium salts, namely magnesium chloride or magnesium sulphate. In this water, the undesirable ions comprise between 28% and 32% of the total dissolved ion content, which is improved relative to the conventional re-mineralized water but still well above the desired levels.

In comparison, the water produced according to the invention of the present application (denoted by the line marked "DOLOMITE"), the other, undesirable ions (sodium, potassium, chloride, and sulphate) are absent and the calcium, magnesium, and bicarbonate ions collectively comprise 100% of the dissolved ion content. While this represents an extreme case, in any event water according to the invention will have a greatly-reduced content of undesired ions relative to the water produced by prior-art re-mineralization methods.

In an optional variant, the re-mineralized water can further comprise fluoride ions, commonly employed as a prophylactic against the formation of dental caries. This is reflected in the water depicted in the bottom two lines of the table 200, in which the fluoride ions are provided by the dissolution of sodium fluoride and potassium fluoride, respectively. It may equally be envisioned that some mixture of these two salts is employed to provide the desired fluoride content.

While the addition of such fluoride salts will increase the content of undesirable sodium and/or fluoride, the additional amount of these ions is nonetheless acceptably low, as very little fluoride is necessary to achieve the desired prophylactic effect.

Depending on whether sodium fluoride or potassium fluoride is used, the total amount of additional sodium and/or potassium added to the re-mineralized water is only on the order of 2-3 milligrams per litre. When starting from the dolomite re-mineralized water of the present invention, the percentage by weight of ions other than calcium, magnesium, and bicarbonate is thus no greater than 2%.

In each of these three waters according to the present invention, the re-mineralized water has the desired calcium, magnesium, and bicarbonate ions in a concentration which is considered as particularly desirable for the purposes of general consumption: 20 milligrams per litre of calcium, 12.2 milligrams per litre of magnesium, and 122 milligrams per litre of bicarbonate.

Of course, in other embodiments a greater or lesser amount of these ions may be preferred, so long as the molar ratios between them remain as described above and the limit on the percentage by weight of undesirable ions as described above is respected. Generally speaking, in water intended for consumption there will be provided between 10 and 40 milligrams per litre of calcium and between 6 and 25 milligrams per litre of magnesium.

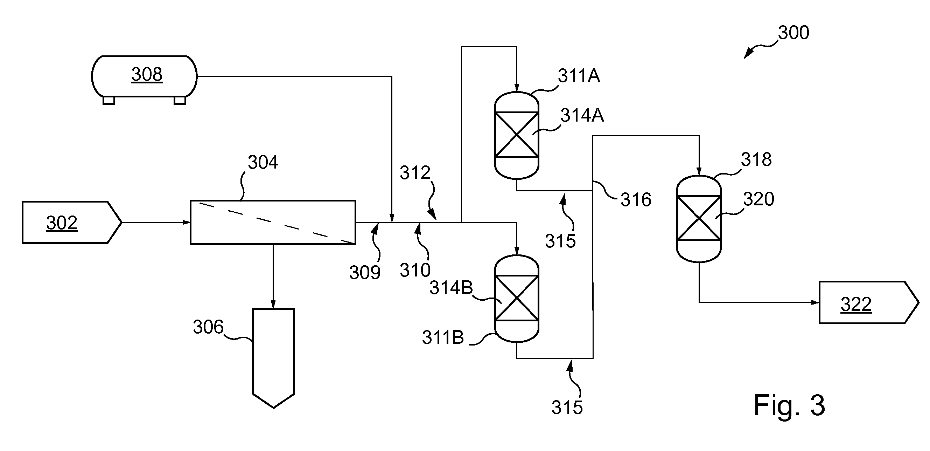

Turning now to Figure 3, a second exemplary apparatus 300 for producing re-mineralized water according to the invention is depicted.

As in the apparatus 100, there is provided a feedwater source 302, a reverse-osmosis filter 304 with a drain 306, and a CO₂ source 308 (the sensors, CO₂ injector, and dosing valve are omitted for clarity) injecting carbon dioxide into a flow of demineralized water 309 to create a flow of carbon-dioxide-enriched water 310

However, unlike the previously-discussed embodiments, the apparatus 300 is provided with two re-mineralizers, 311A and 311 B, which are both fed with the flow of carbon-dioxide-enriched water 310 by way of a bifurcation 312.

Both of the re-mineralizers 311A and 311 B contain a dolomite material bed 314A, 314B, which dissolves the desired ions into the carbon-dioxide-infused water as discussed above. Ideally, but not necessarily, the two re-mineralizers have equally-sized dolomite material beds 314A, 314B. In any event, the two re-mineralizers 311A, 311 B each contribute to the mineral content of the purified, re-mineralized water that is proportionate to the relative sizes of their respective dolomite material beds 314A, 314B.

However, the fact that there are two re-mineralizers 311 A, 311 B means that the operator has a greater degree of flexibility in the operation of the apparatus 300. For instance, the re-mineralizers 311 A, 311 B may be sized so as to each be sufficient for the needs of the apparatus 300; as a result, one may be taken off-line e.g. to permit maintenance on the other. Such a configuration would also increase the amount of time between replenishments of the dolomite material beds 314A, 314B.

Once passed through the re-mineralizers 311 A, 311 B, a flow of purified, re-mineralized water 315 from each of the re-mineralizers 311A, 311B is merged at a bifurcation 316, and then conducted into a fine particulate filter 318, which comprises a filter bed 320 to remove any fine particles which -may have escaped from the re-mineralizers 311A, 311 B. Following this, the water is discharged at an outlet 322, again as described above.

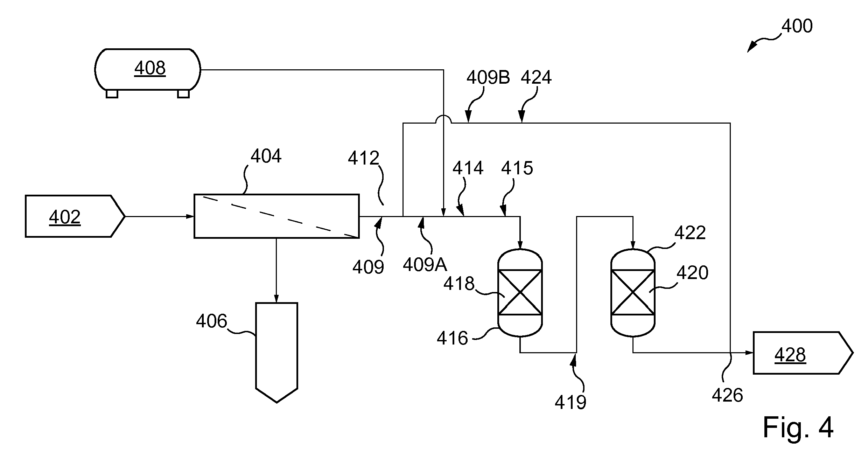

Figure 4 depicts a third exemplary apparatus 400 for producing re-mineralized water according to the invention. As in the apparatuses 100 and 300 discussed above, the apparatus 400 also comprises a feedwater source 402, a reverse-osmosis filter 404 with a drain 406, and a CO₂ source 408 (as with Figure 3, the sensors, CO₂ injector, and dosing valve are omitted for clarity).

Once a flow of demineralized water 309 exits the reverse-osmosis filter 404, it proceeds to a bifurcation 412, dividing the flow of demineralized water 409 approximately in half.

A first half 409A of the demineralized water is conducted via a first branch 414 where, CO₂ is injected to turn it into a flow of carbon-dioxide-enriched water 415. This flow of carbon-dioxide-enriched water 415 is subsequently conducted into a re-mineralizer 416, wherein it flows through a dolomite material bed 418 and is re-mineralized in the manner described above to form a flow of purified, re-mineralized water 419.

The purified, re-mineralized water 419 flowing through the first branch 414 is then conducted through a fine particulate filter 420, wherein a filter bed 422 removes fine particulates in the same way as described with respect to Figure 3.

A second half 409B of the flow demineralized water is conducted through a second branch 424, which bypasses the re-mineralizer 416 and the fine particulate filter 420. The two halves of the flow of water are re-combined at a bifurcation 426, and then conducted to an outlet 428.

It will be apparent that, since only half of the flow of water is sent through the first branch 414, the re-mineralizer 416 must dissolve the calcium, magnesium, and bicarbonate ions to a concentration twice the desired final concentration. However, such a configuration is advantageous in that it permits a great economy of size relative to the embodiment depicted in Figure 3.

In particular, the magnesium filter 420 need only be half as large as the magnesium filter 318 of Figure 3. Moreover, while the re-mineralizers 311 A, 311 B, and 416 are all substantially the same size for a given output of purified, re-mineralized water, the embodiment depicted in Figure 4 requires only one of them.

Moreover, it should be recognized that the second branch 424 is merely illustrative of a process for diluting re-mineralized water to reduce the mineral content thereof. Thus, it need not necessarily be the case that the concentrated re-mineralized water issuing from the re-mineralizer 416 and the fine particulate filter 420 is immediately diluted by the water flowing through the second branch 424 as depicted in Figure 4.

For instance, the concentrated re-mineralized water may be stored and diluted later, on command for immediate consumption. Alternatively, the concentrated, re-mineralized water may be packaged and distributed as such, for later dilution e.g. in a further bottling process or by the end consumer, the final dissolved ion concentration being instead fixed at the point of consumption.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

Especially concerning the content of calcium, magnesium and bicarbonates ions, the content of these ions in the re-mineralized water of the invention can differs from the values presented in table of figure 2 within the range presented in the above specifications according to the wanted re-mineralisation or according to local regulations.

## Claims

1. Re-mineralized water, **characterized in that** it comprises dissolved calcium, magnesium, and bicarbonate ions in a ratio of approximately one mole each of calcium and magnesium ions to four moles of bicarbonate ions, said calcium, magnesium, and bicarbonate ions collectively comprising at least 75% by weight of the total amount of dissolved ions in said re-mineralized water.

2. The re-mineralized water according to claim 1, wherein the group of ions consisting of chloride, sulphate, sodium, and potassium constitutes no more than 20% by weight of all ions dissolved in the re-mineralized water.

3. The re-mineralized water according to claim 2, wherein the group of ions consisting of chloride, sulphate, sodium, and potassium constitutes no more than 10% by weight of all ions dissolved in the re-mineralized water.

4. The re-mineralized water according to claim 3, wherein the group of ions consisting of chloride, sulphate, sodium, and potassium constitutes no more than 2% by weight of all ions dissolved in the re-mineralized water.

5. The re-mineralized water according to any one of the preceding claims, wherein it comprises between 10 and 40 milligrams per litre of calcium ions and between 6 and 25 milligrams per litre of magnesium ions.

6. The re-mineralized water according to claim 5, wherein it comprises 20 milligrams per litre of calcium ions and 12.2 milligrams per litre of magnesium ions.

7. A method for producing a re-mineralized water according to any one of the preceding claims, comprising the steps of:
- providing a flow of feedwater;
- purifying said feedwater by a reverse-osmosis process, thereby producing a flow of demineralized water;
- injecting carbon dioxide into said demineralized water, thereby producing a flow of carbon dioxide-enriched water;
- passing said carbon dioxide-enriched water through a re-mineralizer comprising a dolomite medium, thereby producing a flow of purified, re-mineralized water.

8. The method according to claim 7, further comprising a diluting step wherein the flow of re-mineralized water is diluted with additional de-mineralized water.

9. The method according to either claim 7 or 8, wherein the dolomite medium is a high-purity grade of dolomite.

10. The method according to any one of claims 7 to 9, wherein the flow of re-mineralized water is passed through a fine-particulate filter.

11. A container comprising re-mineralized water according to any one of claims 1 to 6.
